# EUROPEAN PATENT APPLICATION

(11) **EP 3 376 053 A1**
(43) Date of publication of application: **19.09.2018**
(21) Application number: 18162024.6
(22) Date of filing: 15.03.2018
(51) Int. Cl.: F04D 29/58, F04D 25/08, F04D 17/16, F04D 29/42

(54) **BLOWER AND VACUUM CLEANER**

(30) Priority: 17.03.2017 US 201762472765 P; 15.09.2017 JP 2017178336
(71) Applicant: Nidec Corporation, Kyoto-shi, Kyoto 601-8205 (JP)
(72) Inventor: HAYAMITSU, Ryosuke, Kyoto-shi, Kyoto 601-8205 (JP)
(74) Representative: Stöckeler, Ferdinand

(57) **Abstract**

A blower (A) includes a motor (10) that includes a shaft (11); an impeller (20); a motor housing (30); a blower housing (40) that is disposed on an outer side of the impeller (20) in a radial direction, and that opposes an outer surface of the motor housing (30) in the radial direction with a gap therebetween; a circuit board (50) that is disposed below the motor (10) in an axial direction; and a circuit-board case (70) that is disposed below the motor (10) in the axial direction and that surrounds the circuit board (50). The circuit-board case (70) includes a circuit-board-case inlet that allows an outer side and an inner side of the circuit-board case (70) to communicate with each other at an upper end portion of a circuit-board-case cylindrical portion that extends in a direction of a central axis.

## Description

### Field of the Invention

The present disclosure relates to a blower and a vacuum cleaner including the blower.

### Description of the Related Art

An existing electric blower is disclosed in Japanese Unexamined Patent Application Publication No. 2002-021794. The electric blower includes a motor portion and a fan portion that is provided on an output side of a shaft of the motor portion. The fan portion includes an impeller, an air guide that is disposed at an outer peripheral portion of the impeller and that forms a ventilation path and that guides an airflow which flows out from the impeller to the motor portion, and a load-side bracket that covers the impeller and the air guide. A plurality of openings that introduce the airflow from the air guide into the motor portion are provided in the load-side bracket.

When the electric blower rotates, the impeller rotates and a suction force is generated, so that intake air flows into the impeller from a suction opening of a casing, and the intake air is discharged from an outer periphery of the impeller. Airflow discharged from the outer periphery of the impeller reaches an upper surface of the load-side bracket at the motor portion, passes through the openings of the load-side bracket, and is guided into the motor portion.

A first substrate and a second substrate included in a circuit portion that controls the motor portion are disposed in the inside of the motor portion. The first substrate and the second substrate are cooled by the airflow guided into the motor portion.

### SUMMARY OF THE INVENTION

However, in the electric blower that is described in Japanese Unexamined Patent Application Publication No. 2002-021794, since the substrates are disposed in a channel for the airflow generated by the impeller and the airflow strikes the substrates, the substrates become channel resistances in the airflow, as a result of which blowing efficiency may be reduced.

It is an object of the present disclosure to provide a blower that is capable of cooling a circuit for driving a motor and electronic components that are included in the circuit without reducing blowing efficiency.

An exemplary blower of the present disclosure includes a motor that includes a shaft disposed along a central axis extending vertically; an impeller that is secured to the shaft and that is rotatable around the central axis; a motor housing, at least a part of the motor housing being disposed on an outer side of the motor in a radial direction; a blower housing that is disposed on an outer side of the impeller in the radial direction, and that opposes an outer surface of the motor housing in the radial direction with a gap therebetween; a circuit board that is disposed below the motor in an axial direction; and a circuit-board case that is disposed below the motor in the axial direction and that surrounds the circuit board. The circuit-board case includes a circuit-board-case cylindrical portion that extends in a direction of the central axis at a location that is closer to an outer side in the radial direction than the circuit board, and an upper end portion of the circuit-board-case cylindrical portion includes a circuit-board-case inlet that allows an outer side and an inner side of the circuit-board case to communicate with each other.

According to the exemplary blower of the present disclosure, it is possible to cool the circuit for driving the motor and the electronic components that are included in the circuit without reducing blowing efficiency.

The above and other elements, features, steps, characteristics and advantages of the present disclosure will become more apparent from the following detailed description of the preferred embodiments with reference to the attached drawings.

### BRIEF DESCRIPTION OF THE DRAWINGS

Fig. 1 is a perspective view of a vacuum cleaner according to an embodiment;
Fig. 2 is a perspective view of a blower according to an embodiment;
Fig. 3 is a vertical sectional view of the blower shown in Fig. 2;
Fig. 4 is an exploded perspective view of the blower shown in Fig. 2;
Fig. 5 is a perspective view of a motor and an upper motor housing as viewed from therebelow;
Fig. 6 is a plan view of a circuit board and a circuit-board case surrounding the circuit board;
Fig. 7 is a perspective view of an example of the circuit-board case that is used in the blower according to the present disclosure;
Fig. 8 is a plan view of the circuit-board case shown in Fig. 7;
Fig. 9 is a bottom view of the circuit-board case; and
Fig. 10 is a vertical sectional view of a circuit-board case.

### DETAILED DESCRIPTION OF THE PREFERRED EMBODIMENTS

Exemplary embodiments of the present disclosure are described in detail below with reference to the drawings. In the description, in a blower A, a direction parallel to a central axis C of the blower A is an "axial direction", a direction orthogonal to the central axis C of the blower A is a "radial direction", and a direction along an arc around the central axis C of the blower A is a "peripheral direction". In the present description, in the blower A, the shape of each portion and positional relationships between the portions are described with the axial direction being a vertical direction and a side of an intake opening 43 of an impeller cover 41 with respect to an impeller 20 being an upper side. The term "vertical direction" is a name that is used simply for description, and does not limit the positional relationships and directions in the state of use of the blower A. "Upstream" and "downstream" refer to upstream and downstream, respectively, in a direction of circulation of an airflow S that is generated when the impeller 20 is rotated.

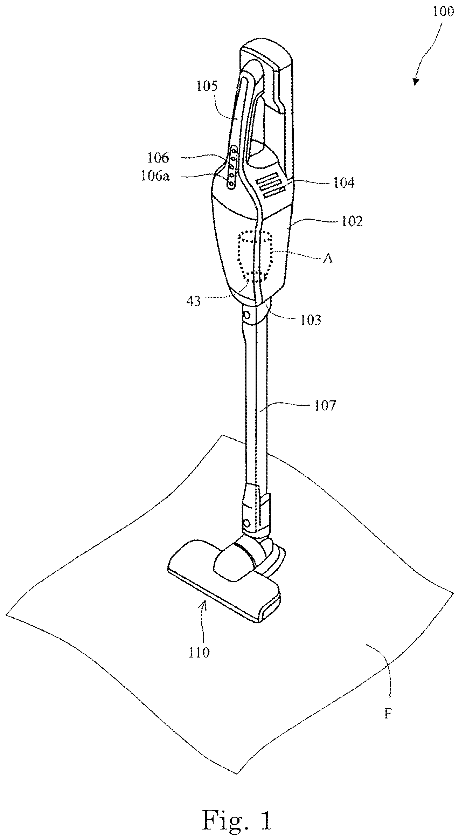

In the present description, in a vacuum cleaner 100, the shape of each portion and positional relationships of the portions are described with a direction towards a floor F (cleaning surface to be cleaned) in Fig. 1 being a "lower side", and a direction away from the floor F being an "upper side". These directions are names that are used simply for description, and do not limit the positional relationships and directions in the state of use of the vacuum cleaner 100. "Upstream" and "downstream" refer to upstream and downstream, respectively, in a direction of circulation of air sucked in from an intake portion 103 when the blower A is driven.

An exemplary vacuum cleaner of an embodiment of the present disclosure is described below. Fig. 1 is a perspective view of the vacuum cleaner according to the embodiment. The vacuum cleaner 100 is a so-called stick-type electric vacuum cleaner, and includes a casing 102 including the intake portion 103 and an exhaust portion 104 provided in a lower surface and an upper surface of the casing 102, respectively. A power supply cord (not shown) is led out from a back surface of the casing 102. The power supply cord is connected to a power supply socket (not shown) in, for example, a side wall of a living room to supply electrical power to the vacuum cleaner 100. The vacuum cleaner 100 may be a so-called robot-type electric vacuum cleaner, a canister-type electric vacuum cleaner, or a handy-type electric vacuum cleaner.

An air path (not shown) that connects the intake portion 103 and the exhaust portion 104 is formed in the casing 102. A dust collecting portion (not shown), a filter (not shown), and the blower A are disposed in this order in the inside of the air path from the upstream side towards the downstream side. Dirt, such as dust, contained in air that circulates in the inside of the air path is intercepted by the filter, and is collected in the inside of the dust collecting portion that is formed in the form of a container. The dust collecting portion and the filter are formed so as to be removable from the casing 102.

A holding portion 105 and an operating portion 106 are provided at an upper portion of the casing 102. A user can hold the holding portion 105 and move the vacuum cleaner 100. The operating portion 106 includes a plurality of buttons 106a. The vacuum cleaner 100 is operated and set by operating the buttons 106a. For example, by operating the buttons 106a, instructions are given to, for example, start driving the blower A, stop driving the blower A, or change the rotation speed of the blower A. A cylindrical suction tube 107 is connected to the intake portion 103. A suction nozzle 110 is mounted on an upstream end (lower end in the figure) of the suction tube 107 so as to be removable from the suction tube 107.

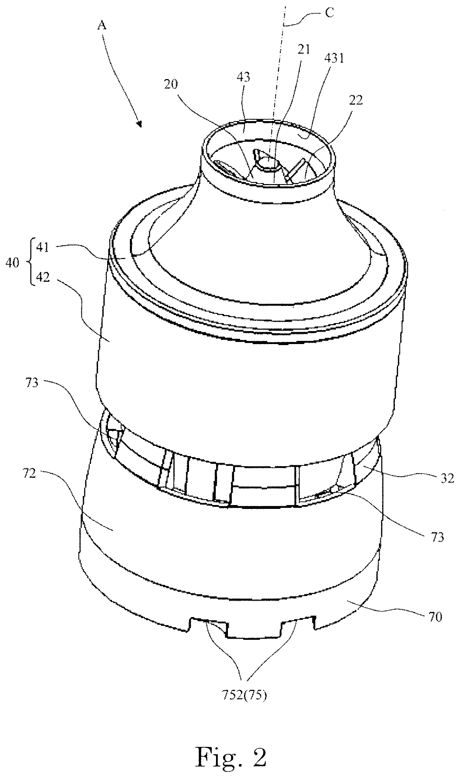

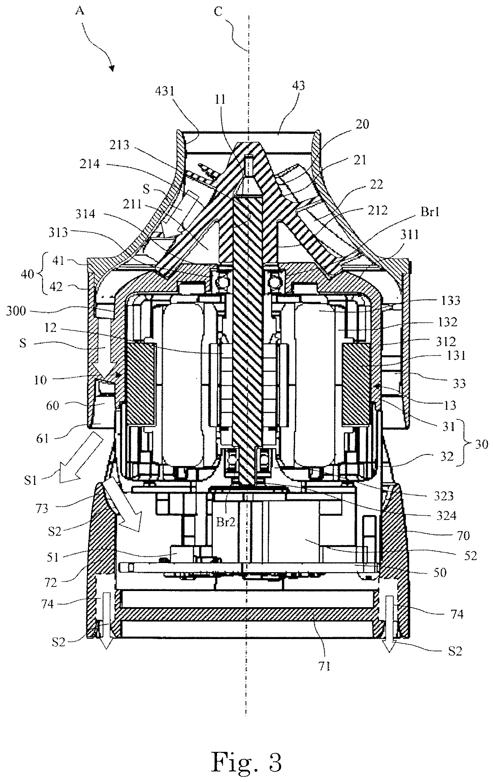

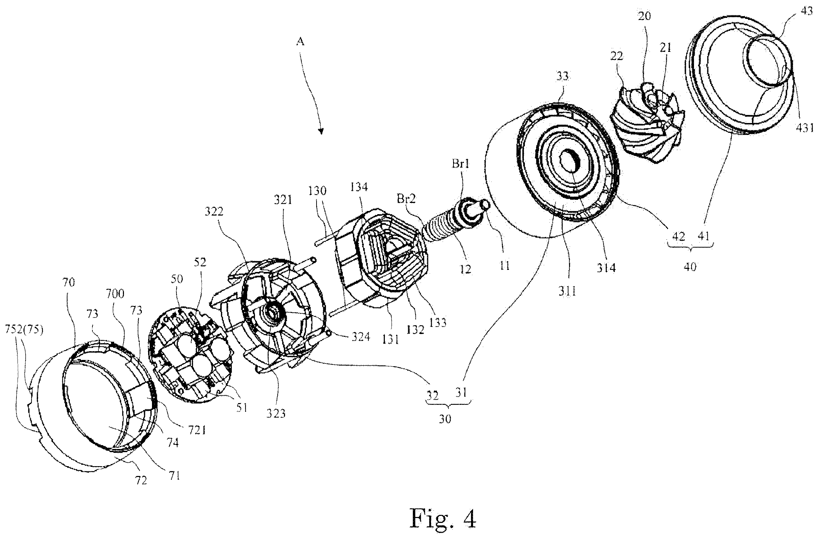

Fig. 2 is a perspective view of the blower according to an embodiment. Fig. 3 is a vertical sectional view of the blower shown in Fig. 2. Fig. 4 is an exploded perspective view of the blower shown in Fig. 2. The blower A is mounted on the vacuum cleaner 100 and sucks air.

The blower A includes a motor 10, the impeller 20, a motor housing 30, a blower housing 40, a circuit board 50, and a circuit-board case 70. In the blower A, the impeller 20 and the motor housing 30 are accommodated in the blower housing 40. In the embodiment, the blower housing 40 accommodates the upper side of the motor housing 30. As shown in Fig. 3, a channel 60 is formed in a gap between the blower housing 40 and an upper motor housing 31 (described later) of the motor housing 30. An upper end (upstream end) of the channel 60 is connected to the impeller cover 41 (described below). An exhaust portion 61 is formed at a lower end (downstream end) of the channel 60.

The motor 10 is accommodated in the motor housing 30. The impeller 20 rotates around a central axis C extending vertically. The motor 10 is disposed below the impeller 20, and rotates the impeller 20. The rotation of the motor 10 causes the impeller 20 to rotate around the central axis C, so that the airflow S is generated. The airflow S that is generated by the rotation of the impeller 20 is discharged from the exhaust portion 61 via the channel 60. As shown in Fig. 3, the motor 10 accommodated in the motor housing 30 is disposed below the impeller 20. In the description below, airflow that flows through the channel 60 is also called the airflow S.

The motor 10 is a so-called inner-rotor-type motor. The motor 10 includes a shaft 11, a rotor 12, and a stator 13. That is, the motor 10 includes the shaft 11 disposed along the central axis C extending vertically.

The shaft 11 has a circular columnar shape. The shaft 11 is disposed along the central axis C. As shown in Fig. 3, the shaft 11 extends through an upper axial hole 314 in an upper housing top plate portion 311 (described later) of the upper motor housing 31. The impeller 20 is secured to an end portion of the shaft 11 that protrudes from the upper housing top plate portion 311. The shaft 11 is rotatably supported by an upper bearing Br1 and a lower bearing Br2.

The upper bearing Br1 and the lower bearing Br2 are ball bearings. The shaft 11 is secured to an inner ring of the upper bearing Br1 and an inner ring of the lower bearing Br2. Examples of securing methods that are used include a bonding-and-insertion method and a press-fitting method. An outer ring of the upper bearing Br1 is secured to the upper motor housing 31, and an outer ring of the lower bearing Br2 is secured to a lower motor housing 32. The upper bearing Br1 and the lower bearing Br2 are not limited to ball bearings.

The rotor 12 is secured to the shaft 11. The rotor 12 rotates together with the shaft 11. That is, the rotor 12 is secured to the shaft 11, and rotates together with the shaft 11. The rotor 12 includes a plurality of magnets (not shown). The plurality of magnets are secured to an outer peripheral surface of the shaft 11. The plurality of magnets are such that N-pole magnetic pole surfaces and S-pole magnetic pole surfaces are alternately arranged.

Instead of the plurality of magnets, a single ring-shaped magnet may be used. In this case, the magnet may be alternately magnetized at an N pole and an S pole in the peripheral direction. The magnet may be integrally molded out of resin mixed with magnetic powder.

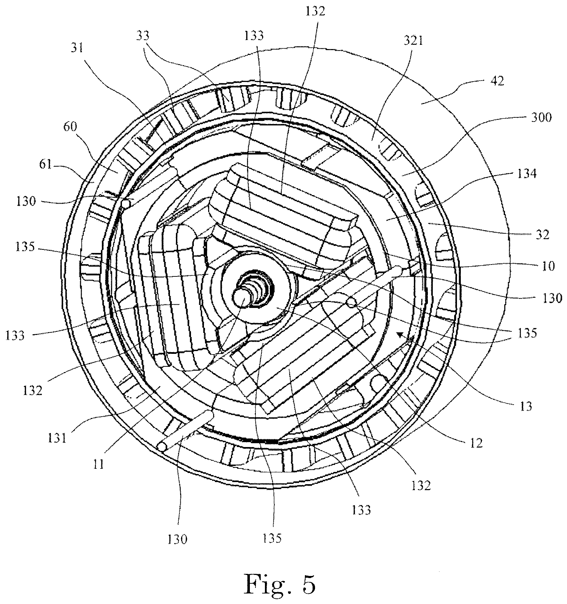

Fig. 5 is a perspective view of the motor and the upper motor housing as viewed from therebelow. The stator 13 is disposed on an outer side of the rotor 12 in the radial direction. That is, the stator 13 opposes the rotor 12 in the radial direction. More specifically, the rotor 12 is disposed on an inner side of the stator 13 in the radial direction. As described above, the motor 10 is an inner-rotor-type motor. The stator 13 includes a stator core 131, an insulator 132, and coils 133. That is, the stator 13 includes the coils 133. The stator core 131 is a laminated body formed from electromagnetic steel plates that are laminated in the axial direction (the vertical direction in Fig. 3). The stator core 131 is not limited to a laminated body formed from electromagnetic steel plates that are laminated, and may be, for example, a single member formed by, for example, casting or firing powder.

The stator core 131 includes a ring-shaped core back 134 and a plurality of teeth 135. The plurality of teeth 135 are formed radially so as to extend inwardly in the radial direction from an inner peripheral surface of the core back 134 towards the magnets (not shown) of the rotor 12. Therefore, the plurality of teeth 135 are disposed in the peripheral direction. The coils 133 are formed by winding conducting wires around the teeth 135 via the insulator 132.

The motor 10 is a brushless motor. A brushless motor is driven by electrical current divided into three phases in which supply timings differ. By supplying electrical current to the plurality of coils 133 at a specified timing, the coils 133 and the magnets of the rotor 12 attract or repel each other to rotate the rotor 12. The motor 10 is, for example, a high-speed rotation type motor rotatable at, for example, a rotation speed greater than or equal to 100,000 rotations per minute. Ordinarily, in order for the motor 10 to rotate at a high speed, it is advantageous for the motor 10 to have a smaller number of coils 133. The motor 10 is controlled by using the three-phase electrical current. Therefore, in the motor 10, the number of coils 133 and the number of teeth 135, where the coils 133 are disposed, are three each. That is, the motor 10 is a three-phase, three-slot motor. The motor 10 is a three-phase motor, and the stator 13 includes three coils 133. In order to achieve a balanced rotation, the three teeth 135 are disposed at equal intervals in the peripheral direction.

In the stator core 131, the inner peripheral surface and an outer peripheral surface of the core back 134 are planar surfaces in the vicinity of the root of each teeth 135. This makes it possible to effectively use a winding space. By shortening a magnetic path, it is possible to reduce loss. It is possible to prevent winding collapse of the coils 133 while preventing disturbance in a magnetic distribution. The inner peripheral surface and the outer peripheral surface of the core back 134 other than at the vicinity of the root of each teeth 135 are curved surfaces. The curved portion of the core back 134 contacts an inner surface of the upper motor housing 31. Here, the curved portion may be press-fitted to the inner surface of the upper motor housing 31. The press-fitting may be a so-called interference fitting, or light press-fitting (a so-called transition fit) whose press-fitting force is weaker than that in the interference fitting. The core back 134 may have a cylindrical shape without including a planar surface. In this case, a cylindrical outer surface is press-fitted to the upper motor housing 31. The core back 134 and the upper motor housing 31 may be secured to each other by using, for example, an insertion-and-bonding method.

The conducting wires of adjacent coils 133 are connected to each other. Lead wires 130 are connected to the connected conducting wires. That is, in the motor 10, three coils 133 are connected to each other by delta connection. The lead wires 130 are connected to a driving circuit, that is, a printed circuit on the circuit board 50 disposed below the blower housing 40. Electric power is supplied to the coils 133 via the lead wires 130. As shown in Fig. 5, there are three terminals.

The motor housing 30 includes the upper motor housing 31 and the lower motor housing 32.

As shown in, for example, Figs. 3 and 4, the upper motor housing 31 includes the upper housing top plate portion 311 and an upper housing cylindrical portion 312. The upper housing top plate portion 311 extends in a direction orthogonal to the central axis C. The upper housing top plate portion 311 has a circular shape when viewed in the axial direction. The upper housing cylindrical portion 312 extends downward in the axial direction from an outer edge of the upper housing top plate portion 311 in the radial direction. The upper housing top plate portion 311 and the upper housing cylindrical portion 312 are an integrally molded body. The upper housing cylindrical portion 312 of the upper motor housing 31 is disposed on an outer side of a part of the shaft 11, the rotor 12, and the stator 13 in the radial direction. That is, at least a part of the motor housing 30 is disposed on the outer side of the motor 10 in the radial direction.

The motor housing 30 may be made of, for example, a metal or a resin. When the motor housing 30 is made of a metal, it is possible to increase the strength of the motor housing 30. In addition, it is possible to efficiently dissipate heat transmitted to the motor housing 30. Further, when the upper motor housing 31 is made of a metal, the metal of the upper motor housing 31 may be, for example, an aluminum alloy or a magnesium alloy. Aluminum alloy and magnesium alloy are easier to mold, are lighter, and are less expensive than other metals.

As shown in Fig. 3, a lower surface of the upper housing top plate portion 311 opposes the rotor 12 and the stator 13 of the motor 10 in the axial direction. The upper housing top plate portion 311 includes an upper bearing holding portion 313 and the upper axial hole 314. The upper bearing holding portion 313 includes a recessed portion whose upper side is recessed and that is disposed at a central portion of the lower surface of the upper housing top plate portion 311. The upper axial hole 314 extends in the axial direction. The outer ring of the upper bearing Br1 is secured to the upper bearing holding portion 313. The shaft 11 extends through the upper axial hole 314. A central axis of the upper bearing holding portion 313 and a central axis of the upper axial hole 314 coincide with each other.

The upper housing cylindrical portion 312 has a cylindrical shape. An upper end portion of the upper housing cylindrical portion 312 in the axial direction is connected to the upper housing top plate portion 311. The stator core 131 is press-fitted to an inner peripheral surface of the upper housing cylindrical portion 312. As described above, since the upper housing cylindrical portion 312 and the upper housing top plate portion 311 are an integrally molded body, heat transmitted from the stator core 131 to the upper housing cylindrical portion 312 is also transmitted to the upper housing top plate portion 311. Therefore, the heat of the stator 13 is efficiently discharged to the outside via the upper motor housing 31.

A plurality of stationary blades 33 are provided at an outer peripheral surface 300 of the upper housing cylindrical portion 312. The stationary blades 33 contact the upper housing cylindrical portion 312. That is, the plurality of stationary blades 33 are disposed closer to an outer side in the radial direction than an outer surface of the upper motor housing 31 in the radial direction, and closer to an inner side in the radial direction than the blower housing 40 (a lower cover 42). The plurality of stationary blades contact at least the outer surface of the upper motor housing 31 in the radial direction. The plurality of stationary blades 33 are disposed at equal intervals in the peripheral direction at the outer surface of the upper motor housing 31 in the radial direction.

When the stationary blades 33 and the upper motor housing 31 are said to contact each other, this may mean not only that different members contact each other but also that they are integrally molded with each other. In the embodiment, the stationary blades 33 are formed from the same member as the upper housing cylindrical portion 312. Although, in the embodiment, the stationary blades 33 and the upper housing cylindrical portion 312 are an integrated member, the stationary blades 33 may be formed from a member that differs from that from which the upper housing cylindrical portion 312 is formed. When the stationary blades 33 and the upper housing cylindrical portion 312 are formed from the same member, it is easier to assemble the blower A.

Each stationary blade 33 has a plate shape, and is inclined in a direction opposite to the direction of rotation of the impeller 20 as each stationary blade 33 extends upward. An impeller 20 side of each stationary blade 33 is curved in a convex shape. Outer edges of the plurality of stationary blades 33 contact the blower housing 40, that is, an inner surface of the lower cover 42. The stationary blades 33 are disposed in parallel in the peripheral direction, and guide the airflow S to the lower side when driving the blower A. The stationary blades 33 are disposed in the channel 60, and rectify the airflow S that flows in the channel 60.

The stationary blades 33 are disposed at equal intervals in the peripheral direction at the outer surface of the upper motor housing 31 in the radial direction. This makes it possible to bring the airflow S closer to a state in which the airflow S is symmetrical with respect to an axis at the outer surface of the upper motor housing 31 in the radial direction, and to bring the cooling characteristics of the upper motor housing 31 closer to a state in which the cooling characteristics are uniform in the peripheral direction.

When the motor 10 rotates, the coils 133 and portions in the vicinity thereof generate heat. This heat is transmitted to the upper motor housing 31. The stationary blades 33 that protrude outward are provided at the outer peripheral surface 300 of the upper housing cylindrical portion 312, and are disposed in the channel 60. Therefore, the stationary blades 33 rectify the airflow S, and serve as heat-dissipating fins that allow the heat of the upper motor housing 31 to escape to the outside. This makes it possible to efficiently cool the upper motor housing 31 that has been made hot by the heat of the stator 13.

The lower motor housing 32 is provided below the upper motor housing 31 in the axial direction. The lower motor housing 32 includes a lower housing bottom portion 321 and a lower housing cylindrical portion 322. The lower housing bottom portion 321 has the shape of a plate that extends in a direction orthogonal to the central axis C. The lower housing cylindrical portion 322 is a cylindrical body that extends in the axial direction. The lower housing bottom portion 321 is integrally connected to a lower end portion of the lower housing cylindrical portion 322 in the axial direction.

The lower housing bottom portion 321 includes a lower bearing holding portion 323 and a lower axial hole 324. The lead wires 130 that are connected to the coils 133 of the stator 13 extend through the lower housing bottom portion 321 in the axial direction. The circuit board 50 is disposed below the lower motor housing 32. The lead wires 130 extending through the lower housing bottom portion 321 are connected to a circuit, that is, a wiring pattern on the circuit board 50.

The lower bearing holding portion 323 protrudes upward in the radial direction from a central portion of the lower housing bottom portion 321, and includes a recessed portion where the central portion is recessed downward. The outer ring of the lower bearing Br2 is secured to the recessed portion of the lower bearing holding portion 323. The lower axial hole 324 is a through hole that extends in the axial direction through the central portion of the lower housing bottom portion 321. The shaft 11 extends through the lower axial hole 324. A central axis of the lower bearing holding portion 323 and a central axis of the lower axial hole 324 coincide with each other.

The lower motor housing 32 is mounted on the lower side of the upper motor housing 31. That is, an upper end portion of the lower housing cylindrical portion 322 in the axial direction contacts a lower end portion of the upper housing cylindrical portion 312 of the upper motor housing 31 in the axial direction. This causes at least a part of a lower surface of the upper motor housing 31 to cover the lower motor housing 32. The lower motor housing 32 is secured to the upper motor housing 31 by using a fastener, such as a screw. The upper motor housing 31 and the lower motor housing 32 may be made of the same material or different materials.

When the upper motor housing 31 and the lower motor housing 32 are secured to each other, the upper bearing Br1 that rotatably supports the upper side of the shaft 11 is held by the upper bearing holding portion 313, and the lower bearing Br2 that rotatably supports the lower side of the shaft 11 is held by the lower bearing holding portion 323. This causes the shaft 11 and the rotor 12 secured to the shaft 11 to be rotatably supported by the motor housing 30 via the upper bearing Br1 and the lower bearing Br2.

Next, the impeller 20 is described with reference to the drawings. The impeller 20 is a so-called diagonal-flow impeller formed from a resin molded part, and includes a hub portion 21 and a plurality of blades 22. The impeller 20 is made of a resin called engineering plastic. Engineering plastic is a resin having mechanical characteristics, such as strength and heat resistance, that are better than those of other resins. The impeller 20 may be made of, for example, a metal. The diameter of the hub portion 21 increases towards the lower side. In other words, the impeller 20 includes the hub portion 21 whose diameter increases towards the lower side. That is, the diameter of the hub portion 21 gradually increases towards the lower side.

The hub portion 21 includes a lower recessed portion 211 and a boss portion 212. A hole portion 213 to which the shaft 11 of the motor 10 is press-fitted is provided at the center of the boss portion 212 (on the central axis C). Therefore, the boss portion 212 and the shaft 11 are connected to each other, and the impeller 20 rotates around the central axis C as a center. That is, when the impeller 20 is secured to the shaft 11 and the motor 10 is driven, the impeller 20 rotates together with the shaft 11. When the impeller 20 rotates, the airflow S is generated. That is, the impeller 20 is secured to the shaft 11 and is rotatable around the central axis C.

The plurality of blades 22 are provided in parallel in the peripheral direction on an outer surface 214 of the hub portion 21. In the embodiment, the blades 22 are provided in parallel on the outer surface 214 of the hub portion 21 at determined intervals in the peripheral direction, and are integrally molded with the hub portion 21. An upper portion of each blade 22 is disposed forwardly of its lower portion in a rotation direction. That is, each blade 22 is inclined with respect to the central axis C.

Since the lower recessed portion 211 of the hub portion 21 of the impeller 20 is provided, it is possible to reduce the weight of the hub portion 21. When the impeller 20, which is a rotating portion, is lighter, it is possible to reduce power consumption, and to facilitate high-speed rotation. In addition, it is possible to suppress the occurrence of sink marks when the impeller 20 is being molded. Since a gap between a lower surface of the hub portion 21 in the axial direction and an upper surface of the motor housing 30 is narrow, the airflow S generated by the impeller 20 does not easily flow into a portion between the hub portion 21 and the motor housing 30. Therefore, it is possible to suppress a reduction in blowing efficiency.

Next, the blower housing 40 is described. The blower housing 40 surrounds an outer side of the upper motor housing 31 in the radial direction with a gap therebetween. The blower housing 40 includes the impeller cover 41 and the lower cover 42.

The impeller cover 41 is disposed on at least an outer side of the impeller 20 in the radial direction. That is, the blower housing 40 is disposed on the outer side of the impeller 20 in the radial direction. The impeller cover 41 is a guide that directs the airflow S generated by the rotation of the impeller 20 in the axial direction. The impeller cover 41 includes the intake opening 43 that opens vertically (axial direction). The intake opening 43 has a bell mouth 431 bent inwardly and extending downward from an upper end thereof. This causes the diameter of the intake opening 43 to be smoothly reduced from the upper side towards the lower side. When, in the impeller cover 41, the intake opening 43 has the bell mouth 431, it is possible to smoothly suck in air. This increases the amount of air that is sucked in from the intake opening 43 when the impeller 20 rotates. Therefore, it is possible to increase the blowing efficiency of the blower A.

In the blower A of the embodiment, the impeller cover 41 is secured to the lower cover 42. In an exemplary securing method, for example, a protrusion may be provided on an outer surface of the lower cover 42 and the impeller cover 41 may be provided with a beam portion extending downward in the axial direction and having a recessed portion that is disposed in a front-end-side inner surface and that is recessed outward in the radial direction. When the impeller cover 41 is moved in the axial direction towards the lower cover 42, the beam portion is flexed and the protrusion of the lower cover 42 is inserted into the recessed portion of the beam portion of the impeller cover 41 to secure the impeller cover 41 to the lower cover 42. The securing method is not limited to this method. It is possible to widely use securing methods that make it possible to suppress movement in the axial direction and the radial direction. Desirably, they can be positioned in the peripheral direction and can be easily attached and detached.

The lower cover 42 is a cylindrical cover having a circular shape in cross section and extending in the axial direction. The lower cover 42 is disposed on the outer side of the upper motor housing 31 in the radial direction. That is, the blower housing 40 faces the outer surface of the motor housing 30 in the radial direction with a gap therebetween. In the embodiment, the blower housing 40 (the lower cover 42) is disposed apart from the outer side of the upper motor housing 31 in the radial direction with a gap therebetween. The plurality of stationary blades 33 are disposed in parallel at equal intervals in the peripheral direction in the gap between the lower cover 42 and the upper motor housing 31.

The lower cover 42 includes openings in an upper end portion and a lower end portion thereof. The upper end portion of the lower cover 42 is connected to a lower end portion of the impeller cover 41. The lower end portion of the impeller cover 41 is inserted into the lower cover 42. An inner surface of the impeller cover 41 is smoothly, for example, differentiably continuous with the inner surface of the lower cover 42. Therefore, any disturbance in the airflow S is suppressed by making smooth the inner surface of the blower housing 40.

Although the upper motor housing 31 and the lower cover 42 may be an integrated molded part, the upper motor housing 31 and the lower cover 42 are not limited thereto. For example, the upper motor housing 31 and the lower cover 42 may be formed as separate members. When the lower cover 42 is formed separately from the upper motor housing 31, the impeller cover 41 and the lower cover 42 may be integrated with each other.

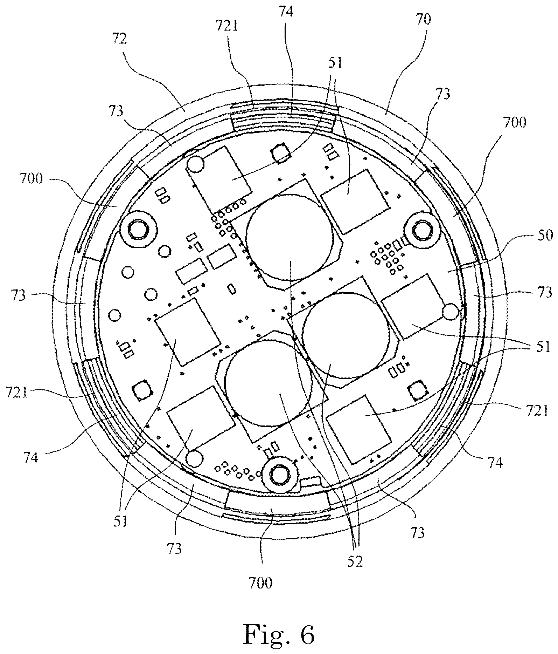

Fig. 6 is a plan view of the circuit board and the circuit-board case surrounding the circuit board. As shown in Figs. 3 and 4, the circuit board 50 is disposed below the lower motor housing 32 in the axial direction. That is, the circuit board 50 is disposed below the motor 10 in the axial direction. The circuit board 50 is circular when viewed in the axial direction. The circuit board 50 is accommodated in the circuit-board case 70. Circuits for driving the motor 10, such as a power supply circuit and a control circuit, are formed at the circuit board 50.

As shown in Fig. 6, the circuit board 50 includes a printed circuit made by a metallic film. At least field effect transistors (FETs 51) and electrolytic capacitors 52 are provided in the printed circuit. Electronic components other than the FETs 51 and the electrolytic capacitors 52 are also provided in the printed circuit. Although the FETs 51 are used as transistors, the transistors are not limited thereto, so that, for example, bipolar transistors, IGBTs, or MOSFETs may also be used. Although the electrolytic capacitors 52 are used as capacitors, the capacitors are not limited thereto, so that, for example, ceramic capacitors or film capacitors may also be used.

As shown in Fig. 6, six FETs 51 are provided on the circuit board 50. The six FETs 51 are disposed closer to the outer side in the radial direction than an intermediate portion (such as the center) between the center of the circuit board 50 and an outer edge of the circuit board 50 in the radial direction. Three electrolytic capacitors 52 are provided on the circuit board 50. The three electrolytic capacitors 52 are disposed closer to the inner side in the radial direction than the intermediate portion (such as the center) between the center of the circuit board 50 and the outer edge of the circuit board 50 in the radial direction. As shown in Fig. 3, the FETs 51 and the electrolytic capacitors 52 are disposed on an upper surface of the circuit board 50 in the axial direction. That is, a plurality of electronic components (51, 52) are disposed on the upper surface of the circuit board 50 in the axial direction. This makes it easier for an airflow S2 that flows in from circuit-board-case inlets 73 and that flows downward in the axial direction to strike the electronic components provided on the circuit board 50. Therefore, it is possible to more efficiently cool the circuit board 50.

The airflow S generated by the rotation of the impeller 20 flows into the channel 60. Then, the airflow S is blown out to the outside of the blower A from the exhaust portion 61. The airflow S that is blown out from the exhaust portion 61 branches into a blowout airflow S1 that is blown out to the outside of the blower A and the inflow airflow S2 that flows into the circuit-board case 70.

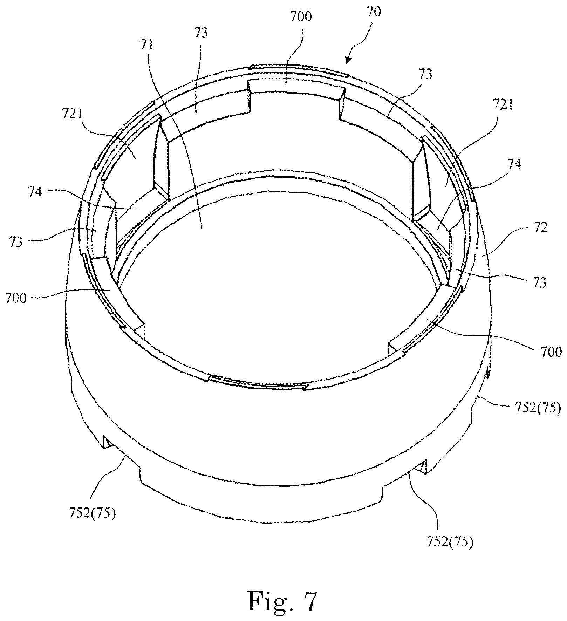

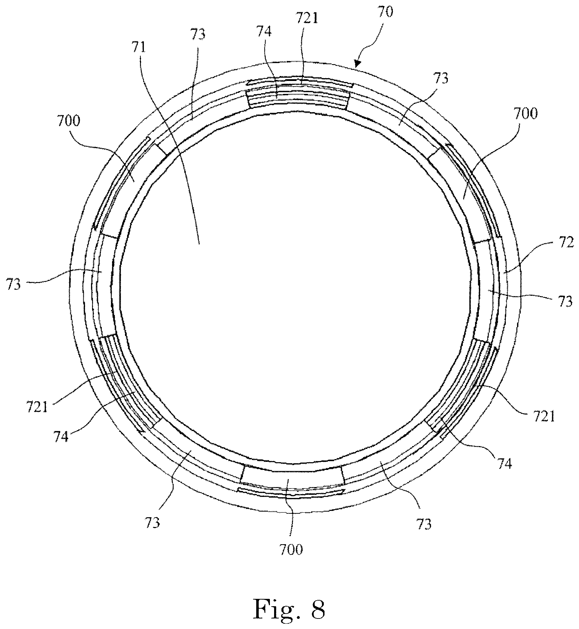

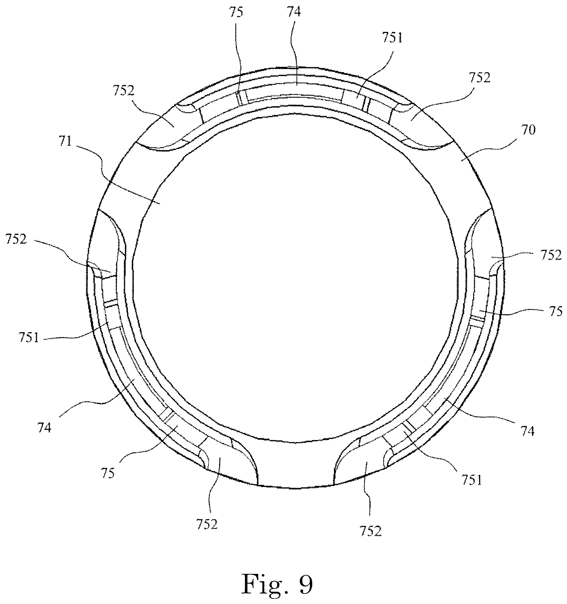

Here, the circuit-board case 70 is described. Fig. 7 is a perspective view of an example of the circuit-board case that is used in the blower according to the present disclosure. Fig. 8 is a plan view of the circuit-board case shown in Fig. 7. Fig. 9 is a bottom view of the circuit-board case. As shown in Fig. 6, the blower A includes the circuit-board case 70 disposed below the lower motor housing 32. The circuit-board case 70 surrounds the circuit board 50 disposed below the lower motor housing 32 in the axial direction. That is, the circuit-board case 70 is disposed below the motor 10 in the axial direction and surrounds the circuit board 50.

As shown in Figs. 7 and 8, the circuit-board case 70 includes a circuit-board-case bottom portion 71, a circuit-board-case cylindrical portion 72, the circuit-board-case inlets 73, and circuit-board-case outlets 74. The circuit-board-case bottom portion 71 has a circular shape when viewed from the axial direction. The circuit-board-case cylindrical portion 72 has a cylindrical shape extending upward in the axial direction from an outer edge of the circuit-board-case bottom portion 71 in the radial direction. That is, the circuit-board-case bottom portion 71 extends inward in the radial direction from a lower end portion of the circuit-board-case cylindrical portion 72 in the axial direction, and surrounds the lower side of the circuit board 50 in the axial direction.

The circuit-board-case cylindrical portion 72 is disposed on an outer side of the circuit board 50 in the radial direction. The circuit-board case 70 has a cylindrical case having an open top and a bottom. The circuit-board case 70 includes the circuit-board-case cylindrical portion 72. The circuit-board-case cylindrical portion 72 extends in the direction of the central axis C at a location that is closer to the outer side in the radial direction than the circuit board 50.

As shown in Figs. 3 and 6, an outer surface of the circuit-board-case cylindrical portion 72 in the radial direction has an inclination where the diameter gradually becomes larger towards the lower side in the axial direction. As shown in Figs. 6 and 7, an upper end portion of the circuit-board-case cylindrical portion 72 in the axial direction includes a stepped portion 700 having a surface extending inward in the radial direction. When the circuit-board case 70 is mounted on the lower side of the lower motor housing 32 in the axial direction, the stepped portion 700 contacts a lower end portion of the lower motor housing 32 in the axial direction. That is, an inner surface of the upper end portion of the circuit-board-case cylindrical portion 72 in the axial direction contacts an outer surface of the lower end portion of the lower motor housing 32 in the axial direction. The circuit-board case 70 is disposed below the motor housing 30 in the axial direction. This allows the airflow S to flow into the circuit-board case 70 while suppressing a reduction in blowing efficiency. That is, compared to a structure in which the airflow S is caused to strike the circuit board at a region that is closer to the impeller 20, in the structure of the embodiment, the airflow S strikes the circuit board 50 on the downstream side, so that it is possible to cool the circuit board 50 and the electronic components while suppressing a reduction in the blowing efficiency.

At least a part of the inner surface of the upper end portion of the circuit-board-case cylindrical portion 72 in the axial direction may contact the outer surface of the lower end portion of the lower motor housing 32 in the axial direction. This makes it possible to increase an opening area of the circuit-board-case inlets 73 that are formed in an upper end portion of the circuit-board case 70 in the axial direction, that is, to increase the amount of inflow airflow S2 that flows in from the circuit-board-case inlets 73. The upper end portion of the circuit-board-case cylindrical portion 72 in the axial direction is disposed closer to the outer side in the radial direction than an outer surface of the lower motor housing 32 in the radial direction, and is disposed closer to an inner side in the radial direction than the inner surface of the lower cover 42 of the blower housing 40 in the radial direction.

The circuit-board-case inlets 73 are formed in the upper end portion of the circuit-board-case cylindrical portion 72. The circuit-board-case inlets 73 are recessed portions that are recessed outwardly in the radial direction from the inner surface of the upper end portion of the circuit-board-case cylindrical portion 72. When the inner surface of the upper end portion of the circuit-board-case cylindrical portion 72 in the axial direction contacts the outer surface of the lower end portion of the lower motor housing 32 in the axial direction, a gap is formed between the lower motor housing 32 and the circuit-board-case inlets 73, which are recessed portions. This gap allows an outer side and an inner side of the circuit-board case 70 to communicate with each other. When the inner surface of the upper end portion of the circuit-board-case cylindrical portion 72 in the axial direction contacts the outer surface of the lower end portion of the lower motor housing 32 in the axial direction, the circuit-board-case inlets 73 allow the outer side and the inner side of the circuit-board case 70 to communicate with each other. That is, the blower A includes the circuit-board-case inlets 73 in the upper end portion of the circuit-board-case cylindrical portion 72.

The circuit-board-case inlets 73 allow the outer side and the inner side of the circuit-board case 70 to communicate with each other. Therefore, when a part of the airflow S flowing through the gap between the motor housing 30 and the blower housing 40 flows in from the circuit-board-case inlets 73, it is possible to cool the electronic components provided on the circuit board 50. When the coils 133 of the motor 10 and the circuit board 50 are connected to each other, it is also possible to cool the coils 133 by blowing the inflow airflow S2 against the lead wires 130. By cooling the coils 133, it is possible to suppress an output reduction, that is, an efficiency reduction caused by an increase in the temperature of the motor 10.

In the circuit-board case 70, six circuit-board-case inlets 73 are disposed at equal intervals in the peripheral direction (see Figs. 6 and 8). However, the number of circuit-board-case inlets 73 is not limited to six. When the plurality of circuit-board-case inlets 73 are provided, the plurality of circuit-board-case inlets 73 may be disposed at different intervals in the peripheral direction. As shown in Fig. 3, the circuit-board-case inlets 73 are disposed below the exhaust portion 61 in the axial direction.

The circuit-board case 70 includes the circuit-board-case outlets 74 below the circuit-board-case inlets 73 in the axial direction. That is, the circuit-board case 70 includes the circuit-board-case outlets 74. The circuit-board-case outlets 74 allow the inner side and the outer side of the circuit-board case to communicate with each other at a location below the circuit-board-case inlets 73 in the axial direction. Therefore, the inflow airflow S2 that has flown in from the circuit-board-case inlets 73 smoothly flows out to the outside of the circuit-board case 70 from the circuit-board-case outlets 74. Consequently, when the inflow airflow S2 in the inside of the circuit-board case 70 effectively flows out to the outside of the circuit-board case 70, it is possible to suppress turbulence in the circuit-board case 70 and to suppress a reverse flow of the air from the circuit-board-case inlets 73. As shown in Figs. 6 and 7, recessed grooves 721 extending in the axial direction are provided in an inner surface of the circuit-board-case cylindrical portion 72. The recessed grooves 721 extend downward in the axial direction. Lower end portions thereof in the axial direction are connected to the circuit-board-case outlets 74 in the circuit-board-case bottom portion 71. The circuit-board-case outlets 74 are provided in the circuit-board-case bottom portion 71. That is, the circuit-board-case outlets 74 are positioned below the circuit board 50 in the axial direction. Therefore, the inflow airflow S2 that has flown in from the circuit-board-case inlets 73 strikes the circuit board 50 and cools the electronic components provided on the circuit board 50, and then flows downward in the axial direction and is discharged to the outer side of the circuit-board case 70 via the circuit-board-case outlets 74. This makes it possible to suppress an increase in the temperatures of the electronic components.

The circuit-board-case outlets 74 are through holes that extend through the circuit-board-case bottom portion 71 in the axial direction. Three circuit-board-case outlets 74 are provided in the circuit-board case 70. That is, the circuit-board-case outlets 74 are through holes that extend through the circuit-board-case bottom portion 71 in the axial direction. The inflow airflow S2 that flows in from the circuit-board-case inlets 73 includes a velocity component that faces downward in the axial direction. Therefore, when the circuit-board-case outlets 74 are through holes that extend through the circuit-board-case bottom portion 71 in the axial direction, it is possible to efficiently discharge the inflow airflow S2 that has flown into the circuit-board case 70. The number of circuit-board-case outlets 74 is not limited to three. The size and the number of circuit-board-case outlets 74 are widely selectable from those that allow the inflow airflow S2 that has flown in from the circuit-board-case inlets 73 to be efficiently discharged to the outer side of the circuit-board case 70.

As shown in Fig. 8, when the circuit-board case 70 is viewed from the axial direction, the circuit-board-case inlets 73 and the circuit-board-case outlets 74 are disposed at locations that differ from each other in the peripheral direction. Therefore, it is possible to suppress the flowing out of the inflow airflow S2 that has flown in from the circuit-board-case inlets 73 from the circuit-board-case outlets 74 without striking, for example, the circuit board 50. Consequently, it is possible to efficiently cool the circuit board 50.

The blower A has the above-described structure. Next, the operation of the blower A is described. When electrical current is supplied to the coils 133 via the lead wires 130, the motor 10 is driven. When the motor 10 is driven, the shaft 11 rotates, and the impeller 20 secured to the shaft 11 rotates. When the impeller 20 rotates, the airflow S is generated (see Fig. 3).

The airflow S generated by the rotation of the impeller 20 flows into the channel 60. The airflow S that has flown into the channel 60 is rectified by the stationary blades 33. The stationary blades 33 cause the airflow S to flow in a state closer to a state in which the airflow S is symmetrical with respect to an axis with the central axis C as the center. Then, the airflow S is blown out to the outside of the blower A from the exhaust portion 61. The circuit-board-case inlets 73 are disposed below the exhaust portion 61 in the axial direction. Therefore, the airflow S that is blown out from the exhaust portion 61 branches into the blowout airflow S1 that is blown out to the outside of the blower A and the inflow airflow S2 that flows into the circuit-board case 70 from the circuit-board-case inlets 73.

The upper end portion of the circuit-board-case cylindrical portion 72 in the axial direction is disposed closer to the outer side in the radial direction than the outer surface of the lower motor housing 32 in the radial direction, and is disposed closer to the inner side in the radial direction than the lower cover 42 of the blower housing 40 in the radial direction. That is, the upper end portion of the circuit-board-case cylindrical portion 72 is disposed closer to the outer side in the radial direction than the outer surface of the motor housing 30 in the radial direction, and is disposed closer to the inner side in the radial direction than the inner surface of the blower housing 40 in the radial direction. This makes it easier to divide a part of the airflow S blown out from the exhaust portion 61 into the inflow airflow S2, and allows the inflow airflow S2 to easily flow into the circuit-board case 70. Further, since the outer surface of the circuit-board-case cylindrical portion 72 in the radial direction has an inclination where the diameter gradually becomes larger towards the lower side in the axial direction, the airflow S is easily divided into the inflow airflow S2, and the inflow airflow S2 easily flows into the circuit-board case 70.

The inflow airflow S2 that has flown in from the circuit-board-case inlets 73 includes a velocity component that faces downward in the axial direction, and a velocity component that faces inward in the radial direction. Therefore, the inflow airflow S2 flows downward in the axial direction and inward in the radial direction from the circuit-board-case inlets 73. Electronic components (here, for example, FETs 51 and electrolytic capacitors 52) are disposed on the upper surface of the circuit board 50 in the axial direction. The inflow airflow S2 is blown against the upper surface of the circuit board 50, that is, the electronic components (here, for example, the FETs 51 and the electrolytic capacitors 52) provided on the circuit board 50. Since the inflow airflow S2 that has flown in from the circuit-board-case inlets 73 is air on the outer side of the circuit-board case 70, the temperature of the air on the outer side of the circuit-board case 70 is lower than air on the inner side of the circuit-board case 70. Therefore, the inflow airflow S2 takes away the heat from, that is, cools the electronic components (here, for example, the FETs 51 and the electrolytic capacitors 52) provided on the circuit board 50.

The inflow airflow S2 is also blown against the wiring pattern that is formed on the circuit board 50, and the wiring pattern is also cooled. Since the electronic components are provided in the wiring pattern, cooling the wiring pattern also indirectly cools the electronic components. For example, when the circuit board 50 is a double-sided circuit board, cooling the wiring pattern on the upper surface by using the inflow airflow S2 also indirectly cools the electronic components mounted on the lower surface.

The FETs 51 are disposed closer to the outer side in the radial direction than the intermediate portion between the center of the circuit board 50 and the outer edge of the circuit board 50 in the radial direction. As shown in Fig. 6, when the circuit board 50 and the circuit-board case 70 are viewed in the axial direction, the six FETs each overlap in the radial direction a different circuit-board-case inlet 73 disposed in the circuit-board case 70. Therefore, a large portion of the inlet airflow S2 that has flown in from the circuit-board-case inlets 73 is directly blown against the FETs 51. This causes the FETs 51 to be efficiently cooled by the inflow airflow S2. Not all of the FETs 51 need to be disposed at a location that overlaps a circuit-board-case inlet 73 in the radial direction. However, it is desirable that at least one FET 51 overlap a circuit-board-case inlet 73 in the radial direction.

The temperatures of the FETs 51 during driving are higher than those of the other components that are disposed on the circuit board 50. At the circuit board 50, the electronic components (FETs 51) whose temperatures become higher than those of the other electronic components are disposed closer to the outer side in the radial direction than the intermediate portion in the radial direction between the central axis C of the circuit board 50 and the outer edge of the circuit board 50 in the radial direction. Therefore, the inlet airflow S2 that has flown in from the circuit-board-case inlets 73 easily strikes the electronic components whose temperature tends to become high. Consequently, it is possible to efficiently cool the electronic components whose temperatures tend to become high. When viewed in the axial direction, at least one of the electronic components (FETs 51) that are disposed closer to the outer side in the radial direction than the intermediate portion in the radial direction between the central axis C of the circuit board 50 and the outer edge of the circuit board 50 in the radial direction is disposed at a location that overlaps a circuit-board-case inlet 73 in the radial direction. This makes it possible to efficiently cool the electronic components whose temperatures become high. At least one electronic component that is disposed closer to the outer side in the radial direction than the intermediate portion in the radial direction between the central axis C of the circuit board 50 and the outer edge of the circuit board 50 in the radial direction is a transistor (FET 51). Therefore, in the circuit that performs operation control, it is possible to efficiently cool the transistors (FETs 51) whose temperatures tend to become high.

The height of the electrolytic capacitors 52 in the axial direction when the electrolytic capacitors 52 are provided on the upper surface of the circuit board 50 is higher than the heights of the other electronic components that are provided on the circuit board 50. Therefore, the inflow airflow S2 that has struck the electrolytic capacitors 52 are reflected by the electrolytic capacitors 52, and flows towards the outer side in the radial direction. The capacitors 52 are disposed inwardly of the intermediate portion between the center of the circuit board 50 and the outer edge of the circuit board 50 in the radial direction. That is, at least one capacitor (electrolytic capacitor 52) is included among the electronic components disposed on the circuit board 50. The capacitor (52) is disposed closer to the inner side in the radial direction than the intermediate portion in the radial direction between the central axis C of the circuit board 50 and the outer edge of the circuit board 50 in the radial direction.

This makes it difficult to prevent the flow of electrical current, and makes it possible to suppress a reduction in the efficiency with which the circuit board 50 is cooled by airflow. The inflow airflow S2 reflected by the electrolytic capacitors 52 is blown against the electronic components, such as the FETs 51, that are disposed outwardly of the intermediate portion between the center of the circuit board and the outer edge of the circuit board in the radial direction. Therefore, it is possible to efficiently cool the FETs 51 (electronic components whose temperatures become higher than those of the other electronic components).

That is, by surrounding the circuit board 50 with the circuit-board case 70, the inflow airflow S2 easily flows into the circuit board 50. The inflow airflow S2 that has flown into the circuit-board case 70 is directly and/or in large amounts blown against the FETs 51. Among the electronic components that are provided on the circuit board 50, the FETs 51 generate a large amount of heat, that is, their temperatures become high during driving. When the inflow airflow S2 efficiently cools the FETs 51, it is possible to suppress a rise in the temperatures during driving of the FETs 51 themselves and the electronic components that are provided near the FETs 51. This makes it possible to suppress an unstable operation of the circuit disposed on the circuit board 50 caused by a temperature rise, and to stably operate the blower A.

As shown in Fig. 6, the circuit-board-case inlets 73 are disposed at equal intervals in the peripheral direction. The electronic components (FETs 51, electrolytic capacitors 52) that are provided on the circuit board 50 may be disposed at equal intervals or at substantially equal intervals in the peripheral direction. Due to such a disposition, the circuit-board-case inlets 73 are disposed at equal intervals in the peripheral direction, so that the inflow airflow S2 that flows in is uniform or substantially uniform in the peripheral direction. In addition, the plurality of electronic components (FETs 51, electrolytic capacitors 52) can be efficiently cooled.

The circuit-board case 70 includes the circuit-board-case outlets 74 below the circuit-board-case inlets 73 in the axial direction. Therefore, the inflow airflow S2 that has flown in from the circuit-board-case inlets 73 are discharged to the outside of the circuit-board case 70 from the circuit-board-case outlets 74.

As shown in Fig. 6, the outside diameter of the circuit board 50 that is accommodated in the circuit-board case 70 is the same or substantially the same as that of the inner surface of the circuit-board-case cylindrical portion 72. In such a case, the inflow airflow S2 that has flown in from the circuit-board-case inlets 73 does not easily move below the circuit board 50 in the axial direction. Therefore, the inflow airflow S2 is not easily discharged from the circuit-board-case outlets 74 that are positioned below the circuit board 50 in the axial direction. Accordingly, in the circuit-board case 70, the inner surface of the circuit-board-case cylindrical portion 72 includes the recessed grooves 721 extending in the axial direction. Since the circuit-board-case cylindrical portion 72 includes the recessed grooves 721, even if the outer edge of the circuit board 50 is in contact with or is close to the inner surface of the circuit-board-case cylindrical portion 72, the inflow airflow S2 can flow below the circuit board 50 in the axial direction. In addition, since the lower sides of the recessed grooves 721 in the axial direction are connected to the circuit-board-case outlets 74, it is possible to efficiently discharge the inflow airflow S2 to the outside of the circuit-board case 70.

As shown in Fig. 6, when viewed in the axial direction, the circuit-board-case outlets 74 are provided at positions that differ from those of the circuit-board-case inlets 73 in the peripheral direction. Therefore, discharge of the inlet airflow S2 that has flown in from the circuit-board-case inlets 73 from the circuit-board-case outlets 74 without being blown against the circuit board 50 is suppressed. Consequently, it is possible to increase the cooling effect on the electronic components (here, the FETs 51 and the electrolytic capacitors 52) provided on the circuit board 50 by the inflow airflow S2.

Accordingly, in the circuit-board case 70, the inflow airflow S2 that has flown towards the inner side can be effectively discharged to the outer side from the circuit-board-case outlets 74. Therefore, it is possible to suppress turbulence in the inside of the circuit-board case 70 or an increase in the internal air pressure of the circuit-board case 70, which occur when the inflow airflow S2 that has flown into the circuit-board case 70 cannot be discharged to the outside.

Although the airflow S that flows through the channel 60 is rectified by the stationary blades 33, variations in pressure occur in the peripheral direction. That is, the pressure on the outer side of the circuit-board-case inlets 73 varies. In the circuit-board case 70, the occurrence of a case in which the pressure on the inner side of the circuit-board case 70 becomes higher than the pressure on the outer side of the circuit-board case 70 is suppressed by discharging the inflow airflow S2 that has flown towards the inner side to the outside. Even if the pressure on the outer side of the circuit-board-case inlets 73 becomes low, it is possible to suppress reverse flow of the airflow S from the inner side towards the outer side in the vicinity of the circuit-board-case inlets 73. This makes it possible to suppress a reduction in the blowing efficiency of the blower A.

As described above, the blower A is mounted on a mounting unit of, for example, a vacuum cleaner, and used. When the blower A is mounted on the mounting unit, the circuit-board-case bottom portion 71 of the circuit-board case 70 may be mounted on a flat plate by bringing the circuit-board-case bottom portion 71 in close contact with the flat plate. In addition, the circuit-board-case bottom portion 71 may be mounted on the flat plate by, for example, bonding or welding. In the circuit-board case 70, the circuit-board-case outlets 74 are covered by the flat plate, as a result of which the inflow airflow S2 is no longer blown out from the circuit-board-case outlets 74 or is not easily blown out from the circuit-board-case outlets 74.

Therefore, in the circuit-board case 70 according to the embodiment, as shown in Fig. 9, a lower surface of the circuit-board-case bottom portion 71 of the circuit-board case 70 has circuit-board-case lower groove portions 75. As shown in Fig. 9, each circuit-board-case lower groove portion 75 includes a communicating portion 751 and a wide width portion 752. Each communicating portion 751 communicates with a lower side of its corresponding circuit-board-case outlet 74 in the axial direction. That is, the outer side of each circuit-board-case outlet 74 communicates with its corresponding communicating portion 751. The wide width portions 752 extend smoothly towards two sides in the peripheral direction from their corresponding communicating portion 751. That is, the circuit-board case 70 includes the circuit-board-case lower groove portions 75 (752) that extend smoothly towards the two sides in the peripheral direction from the lower end portions of their corresponding circuit-board-case outlets 74.

By virtue of such a structure, even if a different member exists at a location that overlaps the circuit-board-case outlets 74 in the axial direction on the outer side of the circuit-board case 70, the blockage of the circuit-board-case outlets 74 is suppressed, and the circuit-board-case outlets 74 communicate with the outer side of the circuit-board case 70 via the circuit-board-case lower groove portions 75. This makes it possible to effectively discharge to the outer side the inflow airflow S2 that has flown into the circuit-board case 70.

The vacuum cleaner 100 includes the blower A. In the vacuum cleaner 100 having the above-described structure, when the motor 10 of the blower A is driven, the impeller 20 rotates around the central axis C as the center. Therefore, air containing dirt, such as dust on the floor F, circulates through the suction nozzle 110, the suction tube 107, the intake portion 103 (all of which are shown in Fig. 1), the dust collecting portion, and the filter in this order. Air that has passed through the filter is taken into the blower housing 40 via the intake opening 43 of the blower A. At this time, the amount of air that is sucked in from the intake opening 43 is increased by the bell mouth 431, and the air is smoothly guided to locations between adjacent blades 22. Therefore, it is possible to increase the blowing efficiency of the blower A. The vacuum cleaner 100 includes the blower A. Consequently, it is possible to realize a vacuum cleaner including the blower A that can cool the stator 13 without reducing the blowing efficiency.

The air that has been taken into the impeller cover 41 circulates between adjacent blades 22, and is accelerated downward and further outward than the rotating impeller 20 in the radial direction. The air accelerated downward on the outer side in the radial direction is blown out further downward than the impeller 20. The air (airflow S) blown out further downward than the impeller 20 flows into the channel 60 in the gap between the upper motor housing 31 and the lower cover 42. The air (airflow S) that has flown into the channel 60 circulates between adjacent stationary blades 33 in the peripheral direction.

The airflow S that has passed the lower ends of the stationary blades 33 is exhausted to the outside of the blower housing 40 via the exhaust portion 61. The airflow S exhausted to the outside of the blower housing 40 circulates in the air path in the inside of the casing 102 of the vacuum cleaner 100, and is exhausted to the outside of the casing 102 from the exhaust portion 104 (see Fig. 1). This allows the vacuum cleaner 100 to clean the floor F.

In the motor 10, when electrical current is supplied to the coils 133, the coils 133 and the stator core 131 generate heat. The airflow S generated at the impeller 20 flows to an outer surface of the upper housing cylindrical portion 312. The plurality of stationary blades 33 formed integrally with the outer surface of the upper housing cylindrical portion 312 are provided in the channel 60 where the airflow S flows. Therefore, the surface area that the airflow S contacts is increased, and heat-dissipating efficiency is increased. This makes it possible to reduce the temperature of the motor 10 and to suppress a reduction in efficiency caused by the heat of the motor 10. Therefore, it is possible to suppress a reduction in the blowing efficiency of the blower A.

By efficiently cooling the circuit board 50, where circuits for driving the motor 10 are formed, and the electronic components, here, the FETs 51 and the electrolytic capacitors 52, provided on the circuit board 50, it is possible to stabilize the operation of the circuits. Therefore, it is possible to stabilize the operation of the blower A and, thus, to stabilize the operation of the vacuum cleaner 100.

Even if, in a place where the blower A is mounted, a member that contacts a bottom surface of the circuit-board-case bottom portion 71 exists at a location that overlaps the circuit-board-case outlets 74 in the axial direction, the air (airflow) that is discharged from the circuit-board-case outlets 74 pass the circuit-board-case lower groove portions 75, and is effectively discharged to the outer side of the circuit-board case 70. Therefore, the inflow airflow S2 that has flown in from the circuit-board-case inlets 73 and that has cooled the electronic components provided on the circuit board 50 can be effectively discharged to the outside of the circuit-board case 70.

The wide width portions 752 of the circuit-board-case lower groove portions 75 may open on the outer side of the circuit-board case 70 in the radial direction. This makes it possible to, even if the entire lower surface of the circuit-board-case bottom portion 71 is air-tightly covered, effectively discharge the airflow that has flown in from the circuit-board-case inlets 73 to the outer side of the circuit-board case 70.

In the embodiment, the circuit-board-case outlets 74 are through holes that extend through the circuit-board-case bottom portion 71 in the axial direction. However, the circuit-board-case outlets 74 are not limited thereto. For example, the circuit-board-case outlets 74 may be through holes that extend through the circuit-board-case cylindrical portion 72 from the inner side to the outer side of the circuit-board case 70 at locations below the circuit-board-case inlets 73 in the axial direction. At this time, the circuit-board-case cylindrical portion 72 may be one that is disposed below the circuit board 50 in the axial direction. It is desirable that the gap that is capable of passing the inflow airflow S therethrough be one that is situated between the inner surface of the circuit-board-case cylindrical portion and the outer edge of the circuit board 50. The circuit board 50 may have a through hole, or as a structure for disposing a plurality of circuit boards in parallel, a plurality of circuit boards may be arranged in parallel, gaps that pass the inflow airflow S2 therethrough may be formed between the plurality of circuit boards.

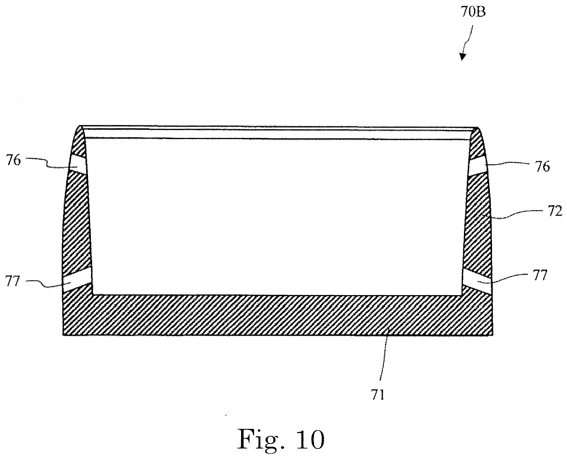

Another embodiment of a circuit-board case that is used in the blower according to the present disclosure is described with reference to the drawings. Fig. 10 is a vertical sectional view of a circuit-board case 70B. The circuit-board case 70B shown in Fig. 10 includes circuit-board-case inlets 76 instead of the circuit-board-case inlets 73; and circuit-board-case outlets 77 instead of the circuit-board-case outlets 74. Portions other than such portions have the same structures as those of the circuit-board case 70 shown in the previous embodiment. Therefore, the portions of the circuit-board case 70B that are the same as those of the circuit-board case 70 are given the same reference numerals as those given to the same portions of the circuit-board case 70, and the portions of the circuit-board case 70B that are substantially the same as those of the circuit-board case 70 are not described in detail below.

As shown in Fig. 10, the circuit-board case 70B includes the circuit-board-case inlets 76 and the circuit-board-case outlets 77. The circuit-board-case inlets 76 are disposed closer to the lower side in the axial direction than an upper end portion of the circuit-board-case cylindrical portion 72 in the axial direction. The circuit-board-case inlets 76 extend through the circuit-board-case cylindrical portion 72 in the radial direction. That is, the circuit-board-case inlets 76 allow the outer side and the inner side of the circuit-board-case cylindrical portion 72 to communicate with each other in the radial direction. It is desirable that the circuit-board-case inlets 76 be provided at a portion where the outer surface of the circuit-board-case cylindrical portion 72 is inclined outward. When the circuit-board-case inlets 76 are provided at the inclined portion, the airflow S blown out from the exhaust portion 61 is easily branched into the inlet airflow S2, and the flow quantity of the inlet airflow S2 can be increased. The circuit-board-case inlets 76 may be inclined from the outer side in the radial direction towards the inner side in the radial direction, and downward in the axial direction. Such an inclination makes it possible to reduce the resistance of the inflow airflow S2 that has flown into the circuit-board-case inlets 76, and to suppress a reduction in the air-flow velocity of the inflow airflow S2. This makes it possible to suppress a reduction in the flow quantity of the inflow airflow S2.

The circuit-board-case outlets 77 are disposed closer to the lower side in the axial direction than the circuit-board-case inlets 76 of the circuit-board-case cylindrical portion 72. By disposing the circuit-board-case outlets 77 below the circuit-board-case inlets 76 in the axial direction, the inflow airflow S2 that has flown in from the circuit-board-case inlets 76 can be efficiently discharged from the circuit-board-case outlets 77.

Even more specifically, the circuit board 50 is disposed between the circuit-board-case inlets 76 and the circuit-board-case outlets 77 in the axial direction. Therefore, the inflow airflow S2 that has flown in from the circuit-board-case inlets 76 is temporarily blown against the electronic components (here, for example, the FETs 51 and the electrolytic capacitors 52) provided on the circuit board 50. The inflow airflow S2 that has cooled the FETs 51 and the electrolytic capacitors 52 is discharged to an outer side of the circuit-board case 70B from the circuit-board-case outlets 77 disposed below the circuit board 50 in the axial direction.

Since the circuit-board-case inlets 76 and the circuit-board-case outlets 77 allow the outer side and the inner side of the circuit-board-case cylindrical portion 72 in the radial direction to communicate with each other, the inflow airflow S2 easily flows into the circuit-board case 70B and the inflow airflow S2 that flows in the circuit-board case 70B easily flows to the outside of the circuit-board case 70B. This makes it possible to effectively cool the electronic components provided on the circuit board 50.

The other features are the same as those of the previous embodiment.

The present disclosure is applicable to, for example, a blower and a vacuum cleaner including the blower.

Features of the above-described preferred embodiments and the modifications thereof may be combined appropriately as long as no conflict arises.

While preferred embodiments of the present disclosure have been described above, it is to be understood that variations and modifications will be apparent to those skilled in the art without departing from the scope of the present disclosure. The scope of the present disclosure, therefore, is to be determined solely by the following claims.

## Claims

1. A blower (A) comprising:
a motor (10) that includes a shaft (11) disposed along a central axis (C);
an impeller (20) that is secured to the shaft (11) and that is rotatable around the central axis (C);
a motor housing (30), at least a part of the motor housing (30) being disposed on an outer side of the motor (10) in a radial direction;
a blower housing (40) that is disposed on an outer side of the impeller (20) in the radial direction, and that opposes an outer surface of the motor housing (30) in the radial direction with a gap therebetween;
a circuit board (50) that is disposed below the motor (10) in an axial direction; and
a circuit-board case (70) that is disposed below the motor (10) in the axial direction and that surrounds the circuit board (50),
wherein the circuit-board case (70) includes
a circuit-board-case cylindrical portion (72) that extends in a direction of the central axis (C) at a location that is closer to an outer side in the radial direction than the circuit board (50), and
wherein an upper end portion of the circuit-board-case cylindrical portion (72) includes a circuit-board-case inlet (73, 76) that allows an outer side and an inner side of the circuit-board case (70) to communicate with each other.

2. The blower (A) according to Claim 1, wherein the upper end portion of the circuit-board-case cylindrical portion (72) is disposed closer to the outer side in the radial direction than the outer surface of the motor housing (30) in the radial direction, and is disposed closer to an inner side in the radial direction than an inner surface of the blower housing (40) in the radial direction.

3. The blower (A) according to Claim 1 or Claim 2, wherein the circuit-board case (70) is disposed below the motor housing (30) in the axial direction.

4. The blower (A) according to any one of Claims 1 to 3, wherein the circuit-board case (70) further includes a circuit-board-case outlet (74, 77) that allows the inner side and the outer side of the circuit-board case (70) to communicate with each other at a location below the circuit-board-case inlet (73, 76) in the axial direction.

5. The blower (A) according to Claim 4, wherein the circuit-board-case outlet (74, 77) is positioned below the circuit board (50) in the axial direction.

6. The blower (A) according to Claim 5, wherein the circuit-board case (70) includes a circuit-board-case bottom portion (71) that extends inward in the radial direction from a lower end portion of the circuit-board-case cylindrical portion (72) in the axial direction, and that surrounds a lower side of the circuit board (50) in the axial direction, and
wherein the circuit-board-case outlet (74) is a through hole that extends through the circuit-board-case bottom portion (71) in the axial direction.

7. The blower (A) according to Claim 6, wherein the circuit-board case (70) includes a circuit-board-case lower groove portion (75) that extends smoothly towards two sides in a peripheral direction from a lower end portion of the circuit-board-case outlet (74, 77).

8. The blower (A) according to any one of Claims 4 to 7, wherein, when viewed in the axial direction, the circuit-board-case inlet (73, 76) and the circuit-board-case outlet (74, 77) are disposed at locations that differ from each other in a peripheral direction.

9. The blower (A) according to any one of Claims 1 to 8, wherein a plurality of electronic components (51, 52) are disposed on an upper surface of the circuit board (50) in the axial direction.

10. The blower (A) according to Claim 9, wherein, of the plurality of electronic components (51, 52) that are disposed on the circuit board (50), an electronic component (51) whose temperature during driving becomes higher than that of the other electronic component or the other electronic components is disposed closer to the outer side in the radial direction than an intermediate portion in the radial direction between the central axis (C) of the circuit board (50) and an outer edge of the circuit board (50) in the radial direction.

11. The blower (A) according to Claim 10, wherein, when viewed in the axial direction, at least one of the electronic components (51) disposed closer to the outer side in the radial direction than the intermediate portion in the radial direction between the central axis (C) of the circuit board (50) and the outer edge of the circuit board (50) in the radial direction is disposed at a location that overlaps the circuit-board-case inlet (73, 76) in the radial direction.

12. The blower (A) according to Claim 10 or Claim 11, wherein at least one of the electronic components (51) disposed closer to the outer side in the radial direction than the intermediate portion in the radial direction between the central axis of the circuit board (50) and the outer edge of the circuit board (50) in the radial direction is a transistor.

13. The blower (A) according to any one of Claims 9 to 12, wherein the plurality of electronic components (51, 52) disposed on the circuit board (50) include at least one capacitor (52), and
wherein the at least one capacitor (52) is disposed closer to the inner side in the radial direction than the intermediate portion in the radial direction between the central axis (C) of the circuit board (50) and the outer edge of the circuit board (50) in the radial direction.

14. The blower (A) according to any one of Claims 9 to 13, wherein a plurality of the circuit-board-case inlets (73, 76) are provided at equal intervals in the peripheral direction, and
wherein the plurality of electronic components are disposed at equal intervals in the peripheral direction.

15. A vacuum cleaner (100) comprising:
the blower (A) according to any one of Claims 1 to 14.
